# EUROPÄISCHE PATENTANMELDUNG

(11) **EP 1 591 478 A1**
(43) Veröffentlichungstag der Anmeldung: **02.11.2005**
(21) Anmeldenummer: 05006706.5
(22) Anmeldetag: 28.03.2005
(51) Int. Cl.: C08K 7/14, B32B 15/08, B32B 17/10, B32B 5/26, B32B 5/28, B32B 5/02, D04H 13/00

(54) **Flächiges Halbzeug mit glassfaserverstärkten Thermoplasten**

(30) Priorität: 29.03.2004 EP 04405191
(71) Anmelder: Quadrant IP AG, 6300 Zug (CH)
(72) Erfinder: Brentrup, Karl, 5103 Möriken (CH); Baser, Burak, 4600 Olten (CH)
(74) Vertreter: Felder, Peter

(57) **Zusammenfassung**

Die Erfindung betrifft ein flächiges Halbzeug aus mindestens einer Schicht A aus einem thermoplastischen Kunststoff, der mit Fasern in unregelmäßiger Verteilung verstärkt ist, und mindestens einer Schicht B aus einem Fasergewebe, welches mit einem thermoplastischen Kunststoff durchtränkt ist, wobei die Verstärkungsfasem der Schicht A im wesentlichen in zwei Dimensionen angeordnet sind und nicht miteinander verbunden sind.

## Beschreibung

Die Erfindung betrifft ein flächiges Halbzeug, umfassend mindestens eine Schicht A aus einem thermoplastischen Kunststoff, der mit Fasern in unregelmäßiger Verteilung verstärkt ist, und mindestens eine Schicht B aus einem Fasergewebe oder Fasergelege, das mit einem thermoplastischen Kunststoff durchtränkt ist.

Bauteile aus faserverstärkten Halbzeugen finden in zunehmendem Maße Anwendung im Automobilbau. Ein gebräuchliches Verfahren zur Herstellung solcher Halbzeuge ist die Schmelzeimprägnierung. Dabei werden mehrere Lagen von Glasfasermatten und Thermoplast- Schmelzebahnen kontinuierlich, vorzugsweise in einer Doppelbandpresse, laminiert und unter Druck abgekühlt. Das entstandene Halbzeug hat die Fachbezeichnung "glasmattenverstärkter Thermoplast" (GMT). Um ein fließfähiges Halbzeug zu erhalten, werden die Matten genadelt, wobei ein Teil der Fasern senkrecht zur Bahnrichtung orientiert wird und die Fasern miteinander verfilzen. Außerdem wird ein Teil der Fasern zerbrochen. Das Schmelzeimprägnierverfahren ergibt zwar ein hervorragend verarbeitbares Halbzeug, aus dem Fertigteile mit guten mechanischen Eigenschaften hergestellt werden können, es ist technisch aber sehr aufwendig. Außerdem ist die Benetzung der Glasfasern mit dem Thermoplasten recht unvollständig, so dass die Verbindung zwischen Matrix und Fasern zu wünschen übrig lässt. Um diesen Missstand zu beheben, wird in der FR- A 2 749 535 und in WO- A 98/30386 vorgeschlagen, bei der Herstellung des GMT- Halbzeugs zusätzlich Bahnen aus einem Gewebe, das als Faserstränge in Längs- und Querrichtung jeweils eine Fasermischung aus Glasfasern und Thermoplastfasern enthält, zuzuführen und mitzuverpressen. Da die beiden Faserarten im Gewebe sehr eng parallel beieinanderliegen, erhält man beim Heißverpressen eine gleichmäßige und praktisch vollständige Durchmischung von Thermoplastmatrix und Verstärkungsfasem.

Bei einem alternativen Verfahren zur Herstellung eines flächigen Halbzeugs werden Endlosglasfasern oder Schnittglasfasern einer Länge von mehr als 50 mm mit einem thermoplastischen Kunststoff zusammen einem Extruder zugeführt, dort vermischt, durch eine Düse ausgepresst und zu einer flächigen Bahn geformt. Dabei erfolgt Faserbruch und man erhält eine breite Faserlängenverteilung. Die Fasern sind hier nicht miteinander in Matten verfilzt, sie sind vielmehr ohne Verbindung miteinander als Einzelindividuen in der Thermoplastmatrix verteilt. Das entstandene Halbzeug hat die Fachbezeichnung "langfaserverstärkter Thermoplast" (LFT). Verfahren zur Herstellung eines solchen Halbzeugs sind z.B. in DE- A 43 30 860, EP- A 643 091, EP- A 643 093, EP- A 730 002, EP- A 844 924 und DE- A 101 05 812 beschrieben. Diese Halbzeuge umfassen jedoch keine Schicht B.
Bauteile, die aus LFT- Halbzeug durch Heißverpressen und Umformen hergestellt wurden, haben eine verhältnismäßig geringe Biegefestigkeit, außerdem weisen sie eine niedrige Energieaufnahme auf und versagen bei hoher dynamischer Belastung. Dies ist bei Bauteilen aus GMT- Halbzeug nicht in selbem Maße der Fall, da dort die zusammenhängenden und oftmals längeren Fasern eine höhere Festigkeit bewirken.

Der Erfindung lag daher die Aufgabe zugrunde, ein flächiges LFT- Halbzeug bereitzustellen, das zu Fertigteilen mit hoher Biegefestigkeit und hoher Energieaufnahme verarbeitet werden kann.

Diese Aufgabe wird erfindungsgemäß durch ein flächiges Halbzeug nach Anspruch 1 gelöst. Dieses Halbzeug umfasst mindestens eine Schicht A aus einem thermoplastischen Kunststoff, der mit Fasern in unregelmäßiger Verteilung verstärkt ist, und mindestens eine Schicht B aus einem Fasergewebe oder Fasergelege, das mit einem thermoplastischen Kunststoff gleichmäßig und praktisch vollständig durchtränkt ist. Die Verstärkungsfasern der Schicht A weisen eine mittlere Länge (Gewichtsmittel) von 2 bis 100 mm, vorzugsweise von 5 bis 50 mm auf, wobei zumindest 5 Gew.% eine Länge von unter 2 mm, zumindest 50 Gew.% eine Länge von über 2 mm und höchstens 50 Gew.%, vorzugsweise höchstens 20 Gew.%, eine Länge von über 50 mm aufweisen.

Die Verstärkungsfasern sind im wesentlichen nur in zwei Dimensionen angeordnet und sind weder mechanisch noch chemisch miteinander verbunden.

Dabei haben die Maßnahmen der Erfindung insbesondere zur Folge, dass das Halbzeug aufgrund der langen Fasern eine hohe Festigkeit aufweist und dass durch die beigemischten kurzen Fasern die Weiterverarbeitung unterstützt wird. Durch die Kombination der Schichten B mit den Schichten A kommt dieser Effekt überraschenderweise in besonderem Maße zum Tragen, was sich sowohl bei der Weiterverarbeitung des Halbzeugs wie auch bei dessen Eigenschaften positiv auswirkt. Insofern ist gegenüber der DE- A 43 30 860, aus der die LFT- Schicht A für sich genommen grundsätzlich schon bekannt war, ein weiterer vorteilhafter Effekt erzielt worden.

Als Thermoplasten sind z.B. Polyolefine, Polyamide , gesättigte Polyester, Styrolpolymere, Polycarbonate, Polyethersulfone, Polyetherketone und Polyetherimide geeignet. Bevorzugt sind Propylenpolymerisate mit einem Schmelzindex MFI (2,16 kg/210°C) zwischen 10 und 1000 g/10 min, insbesondere zwischen 50 und 500 g/10 min, vorzugsweise Polypropylen und Copolymerisate des Propylens mit Acrylsäure oder Maleinsäureanhydrid. Die Schichten A und B enthalten bevorzugt den gleichen thermoplastischen Kunststoff. Die Schicht A kann darüberhinaus übliche Zusatzstoffe, wie Stabilisatoren, Treibmittel, Füllstoffe, Farbstoffe und Flammschutzmittel, enthalten.

Geeignete Verstärkungsfasern sind solche aus Glas, Kohlenstoff, Aramid, Stahl sowie Naturfasern. Bevorzugt sind E- Glasfasern mit einem Durchmesser von 10 bis 30 µm. Beide Schichten sollten auch die gleiche Faserart enthalten.
Die Fasern der Schicht A haben eine mittlere Länge (Gewichtsmittel) von 2 bis 100 mm, vorzugsweise von 5 bis 50 mm. Sie sind im wesentlichen in zwei Dimensionen in einer Ebene angeordnet, d.h. es gibt praktisch keine Fasern, die senkrecht zur Bahnrichtung stehen. Die Fasern sind nicht miteinander mechanisch oder chemisch verbunden, d.h. sie liegen in der Matrix als Einzelindividuen vor.

In der Schicht A liegt das Gewichtsverhältnis Thermoplast zu Verstärkungsfasern vorzugsweise zwischen 40 : 60 und 80 : 20, in der Schicht B zwischen 20 : 80 und 60 : 40. Die Schicht A ist vorzugsweise 1 bis 30 mm dick, die Schicht B 1 bis 5 mm. Das erfindungsgemäße flächige Halbzeug ist vorzugsweise 2 bis 30 mm, insbesondere 5 bis 20 mm dick, und 5 bis 200 cm, insbesondere 10 bis 50 cm, breit.

Eine vorteilhafte Ausführung der vorliegenden Erfindung ist ein Halbzeug mit der Schichtenfolge A - B - A. Dieses Halbzeug ergibt Fertigteile mit besonders hoher Biegefestigkeit und hoher Energieaufnahme. Eine andere bevorzugte Ausführung der vorliegenden Erfindung ist ein Halbzeug mit der Schichtenfolge B - A - B, wobei auf die Schichten B ein Faservlies, vorzugsweise aus Glasfasern, mit einem Flächengewicht von 20 bis 100 g/m² aufkaschiert sein kann, wodurch die Oberfläche des Halbzeugs und von daraus hergestellten Fertigteilen verbessert wird. Dadurch kann insbesondere ein zusätzliches Lackieren der Fertigteile vermieden werden.

Bei einem bevorzugten Verfahren zur Herstellung des erfindungsgemäßen Halbzeugs wird mindestens eine LFT- Bahn A mit mindestens einem Mischfaser- gewebe odergelege B' kombiniert. Grundsätzlich wäre es auch möglich, statt eines Mischfasergewebes ein einfaches Glasfasergewebe zusammen mit einer Thermoplastfolie nach EP- A 507 322 aufzulaminieren, um den Verstärkungseffekt zu erhalten. Dabei ergäbe sich jedoch - wie oben ausgeführt - keine vollständige und gleichmäßige Durchtränkung der Schicht B. Bei einem Mischfasergewebe bestehen die Faserstränge sowohl in Längs- als auch in Querrichtung - oder auch nur in Längs- bzw. Querrichtung - aus einer Fasermischung ("Hybridgarn") von Verstärkungsfasern und Thermoplastfasern im Gewichtsverhältnis 80 : 20 bis 40 : 60. Das Flächengewicht beträgt 500 bis 2000 g/m². Bei einem Mischfasergelege sind die Mischfaserstränge parallel abgelegt. Bevorzugt werden als Mischfasergewebe TWINTEX- Gewebe der Fa. Vetrotex oder COMFIL- Gewebe der Fa. Johns Manville eingesetzt. Bei diesen bestehen die Faserstränge aus einer Mischung von Glasfasern und Polypropylenfasern im Gewichtsverhältnis 60 : 40 oder 75 : 25. Das Flächengewicht der Gewebe beträgt 700 bis 1900 g/m².

Das Laminieren kann diskontinuierlich dadurch erfolgen, dass man mindestens eine vorerwärmte LFT- Platte A mit mindestens einem vorerwärmten Mischfasergewebe bzw. -gelege B' verpresst.

Bei einem kontinuierlichen Verfahren führt man mindestens eine aus einem Extruder ausgepresste LFT- Bahn A direkt mit mindestens einem Mischfasergewebe bzw. -gelege B' zusammen und verpresst sie heiß. Das Verpressen erfolgt zweckmäßigerweise in einer Doppelbandpresse oder einem Kalander. Falls ein Halbzeug der Schichtenfolge B - A - B hergestellt werden soll, können gleichzeitig noch als Außenschichten Faservliese auflaminiert werden

Die erfindungsgemäßen Halbzeuge können zur Herstellung von Bauteilen für die Automobil-, Bau- und Möbeilndustrie verwendet werden. Dazu wird das Halbzeug bei Temperaturen oberhalb des Erweichungbereichs des Thermoplasten durch Pressen in einem Werkzeug verformt.

## Patentansprüche

1. Flächiges Halbzeug mit zumindest einer ersten Schicht A aus einem thermoplastischen Kunststoff, der mit Fasern in unregelmäßiger Verteilung verstärkt ist, und zumindest einer zweiten Schicht B aus einem Fasergewebe oder Fasergelege, welches mit einem thermoplastischen Kunststoff gleichmäßig und praktisch vollständig durchtränkt ist,
**dadurch gekennzeichnet, dass** die Verstärkungsfasern der ersten Schicht A
- eine mittlere Länge (Gewichtsmittel) von 2 bis 100 mm aufweisen, wobei
zumindest 5 Gew.% eine Länge von unter 2 mm,
zumindest 50 Gew.% eine Länge von über 2 mm
und höchstens 50 Gew.% eine Länge von über 50 mm aufweisen,
- im wesentlichen in zwei Dimensionen angeordnet sind und
- nicht miteinander mechanisch oder chemisch verbunden sind.

2. Halbzeug nach Anspruch 1, **dadurch gekennzeichnet, dass** die Verstärkungsfasern der ersten Schicht A
- eine mittlere Länge (Gewichtsmittel) von 5 bis 50 mm aufweisen, wobei
zumindest 5 Gew.% eine Länge von unter 2 mm,
zumindest 50 Gew.% eine Länge von über 2 mm
und höchstens 20 Gew.% eine Länge von über 50 mm aufweisen,
- im wesentlichen in zwei Dimensionen angeordnet sind und
- nicht miteinander mechanisch oder chemisch verbunden sind.

3. Halbzeug nach Anspruch 1 oder 2, **gekennzeichnet durch** eine Dicke von 2 bis 30 mm und eine Breite von 5 bis 200 cm.

4. Halbzeug nach Anspruch 1 oder 2, **gekennzeichnet durch** eine Schichtenfolge A-B-A.

5. Halbzeug nach Anspruch 1 oder 2, **gekennzeichnet durch** eine Schichtenfolge B-A-B.

6. Halbzeug nach Anspruch 5, **dadurch gekennzeichnet, dass** auf eine der zweiten Schichten B ein Faservlies aufkaschiert ist.

7. Halbzeug nach einem der vorstehenden Ansprüche, **dadurch gekennzeichnet, dass** der Thermoplast in der ersten Schichte A und in der zweiten Schicht B jeweils ein Propylenpolymerisat ist.

8. Halbzeug nach einem der vorstehenden Ansprüche, **dadurch gekennzeichnet, dass** die Verstärkungsfasern Glasfasern sind.

9. Verfahren zur Herstellung des flächigen Halbzeugs nach einem der vorstehenden Ansprüche, **dadurch gekennzeichnet, dass** zumindest eine vorerwärmte erste Platte A diskontinuierlich mit zumindest einem vorerwärmten Mischfasergewebe oder Mischfasergelege B' zusammen verpresst wird.

10. Verfahren zur Herstellung des flächigen Halbzeugs nach einem der vorstehenden Ansprüche, **dadurch gekennzeichnet, dass** zumindest eine erste extrudierte Bahn A direkt mit einem Mischfasergewebe oder Mischfasergelege B' zusammengeführt und heiß verpresst wird.

11. Verwendung des Halbzeugs nach einem der vorstehenden Ansprüche zur Herstellung von Bauteilen für die Automobil-, Bau- und Möbelindustrie.
